# EUROPÄISCHE PATENTSCHRIFT

(11) **EP 2 263 109 B1**
(45) Veröffentlichungstag und Bekanntmachung des Hinweises auf die Patenterteilung: **12.06.2019**
(21) Anmeldenummer: 09726541.7
(22) Anmeldetag: 01.04.2009
(51) Int. Cl.: G02B 3/00, B41M 3/14, G07D 7/00

(54) **VERFAHREN ZUM ERZEUGEN EINER MIKROOPTISCHEN DARSTELLUNGSANORDNUNG**
METHOD FOR PRODUCING A MICRO-OPTICAL DISPLAY ARRANGEMENT
PROCÉDÉ DE RÉALISATION D'UN SYSTÈME DE REPRÉSENTATION MICRO-OPTIQUE

(30) Priorität: 02.04.2008 DE 102008016795
(43) Veröffentlichungstag der Anmeldung: 22.12.2010
(73) Patentinhaber: Giesecke+Devrient Currency Technology GmbH, 81677 München (DE)
(72) Erfinder: HOFFMANN, Lars, 85354 Freising (DE); DOTZLER, Manfred, 83661 Lenggries (DE); HEIM, Manfred, 83646 Bad Tölz (DE); DICHTL, Marius, 81371 München (DE); RAHM, Michael, 93155 Hemau (DE); LIEBLER, Ralf, 83727 Schliersee (DE)
(86) Internationale Anmeldenummer: PCT/EP2009/002365
(87) Internationale Veröffentlichungsnummer: WO 2009/121578

(56) Entgegenhaltungen:
- WO-A-2005/106601
- WO-A-2006/087138
- DE-A1-102006 029 852

## Beschreibung

Die Erfindung betrifft Verfahren zum Erzeugen einer mikrooptischen Darstellungsanordnung sowie einen Gegenstand, insbesondere einen Datenträger oder ein Sicherheitselement mit einer solchen Darstellungsanordnung.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

Eine besondere Rolle spielen dabei Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Seit einiger Zeit werden auch so genannte Moire-Vergrößerungsanordnungen als Sicherheitsmerkmale eingesetzt. Die prinzipielle Funktionsweise derartiger Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt, bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, wobei in diesem Fall jeder der Moiréstreifen in Gestalt eines vergrößerten und gedrehten Bildes der wiederholten Elemente des Bildrasters erscheint.

Sicherheitselemente mit einem auf einem Moire-Effekt basierenden Echtheitsmerkmal sind auch in der Druckschrift WO 2006/087138 offenbart. Das Echtheitsmerkmal umfasst dabei eine erste Anordnung mit einer Vielzahl von in einem Raster vorliegenden fokussierenden Elementen und eine zweite Anordnung mit einer Vielzahl von in einem Raster vorliegenden mikroskopischen Strukturen. Die erste und zweite Anordnung sind derart angeordnet, dass die mikroskopischen Strukturen der zweiten Anordnung bei Betrachtung durch die fokussierenden Elemente insbesondere in Vergrößerung zu sehen sind.

Davon ausgehend liegt der Erfindung die Aufgabe zugrunde, die Nachteile des Standes der Technik zu vermeiden und insbesondere ein vorteilhaftes Verfahren zur Herstellung mikrooptischer Moiré-Vergrößerungsanordnungen oder allgemeiner mikrooptischer Darstellungsanordnungen anzugeben.

Diese Aufgabe wird durch das Verfahren mit den Merkmalen der Hauptansprüche gelöst. Ein Gegenstand mit einer solchen mikrooptischen Darstellungsanordnung ist in den nebengeordneten Ansprüchen angegeben. Weiterbildungen der Erfindung sind Gegenstand der Unteransprüche.

Die Erfindung betrifft insbesondere ein Verfahren zum Erzeugen einer mikrooptischen Darstellungsanordnung zur Darstellung eines vorgegebenen Motivs, die ein farbiges Motivraster aus einer Mehrzahl von Mikromotivelementen und ein Fokussierelementraster aus einer Mehrzahl von Mikrofokussierelementen aufweist, das bei Betrachtung der Mikromotivelemente das vorgegebene Motiv rekonstruiert, wobei bei dem Verfahren
T1) eine erste Trägerfolie mit gegenüberliegenden Hauptflächen bereitgestellt wird, auf einer ersten Hauptfläche der ersten Trägerfolie ein Prägelack aufgebracht wird und in Form des Fokussierelementrasters aus einer zumindest lokal periodischen Anordnung einer Mehrzahl von Mikrofokussierelementen geprägt wird,
T2) eine zweite Trägerfolie mit gegenüberliegenden Hauptflächen bereitgestellt wird, auf einer ersten Hauptfläche der zweiten Trägerfolie eine Anordnung von farbigen Mikromotivelementen in Form des Motivrasters erzeugt wird, und
K) die zweite Trägerfolie mit zumindest einem Kaschierkleber auf die dem Fokussierelementraster gegenüberliegende zweite Hauptfläche der ersten Trägerfolie aufkaschiert wird.

Die mikrooptische Darstellungsanordnung kann dabei insbesondere als Moire-Vergrößerungsanordnung, als mikrooptische Vergrößerungsanordnung vom Moiretyp oder als Modulo-Vergrößerungsanordnung ausgeführt sein. Das Funktionsprinzip und die Eigenschaften dieser mikrooptischen Darstellungsanordnungen sind ausführlich in den deutschen Patentanmeldungen DE 10 2005 062132.5 und DE 10 2007 029 203.3 sowie in den internationalen Anmeldungen PCT/EP2006/012374, PCT/EP2008/005171 und PCT/EP2008/005172 beschrieben, deren Offenbarungsgehalte insoweit in die vorliegende Anmeldung aufgenommen werden.

Gemäß der Erfindung wird in Schritt T2) zunächst in einem Schritt
T2P) die zweite Trägerfolie mit gegenüberliegenden Hauptflächen bereitgestellt, wird auf der ersten Hauptfläche der zweiten Trägerfolie ein Prägelack aufgebracht und in Form des Motivrasters aus einer Anordnung von Mikrostrukturen geprägt, deren Formen den gewünschten Mikromotivelementen entsprechen, und werden in einem Schritt T2F) die geprägten Mikrostrukturen der zweiten Trägerfolie mit einer Farbe gefüllt.

Durch die Füllung der Mikrostrukturen in Schritt T2F) mit einer Farbe wird ein Kontrastunterschied zwischen den Vertiefungen der geprägten Mikrostrukturen und den umgebenden erhabenen Bereichen geschaffen, durch den die Mikromotivelemente bei der Betrachtung des Motivrasters durch das Fokussierelementraster zur Rekonstruktion des vorgegebenen Motivs in Erscheinung treten.

Als Farbe kann dabei grundsätzlich jedes Material verwendet werden, das einen wahrnehmbaren Kontrast zu dem umgebenden Prägelack erzeugt, insbesondere opake oder lasierende Farben auf Basis von löslichen Farbstoffen oder von Farbpigmenten. Auch transparente Materialien kommen in Betracht, wenn sie auf andere Weise, beispielsweise durch einen unterschiedlichen Brechungsindex, einen sichtbaren Kontrast der gefüllten Mikrostrukturen zum umgebenden Prägelack herstellen.

Weiter kommen auch Farben auf Basis eines Lackträgers mit metallischen Nanopartikeln in Betracht. Der Effekt der Farbgebung beruht in dieser Erfindungsvariante nach gegenwärtigem Verständnis darauf, dass einfallende elektromagnetische Strahlung Volumen- oder Oberflächenplasmonen in den Nanopartikeln angeregt und/oder Resonanzerscheinungen hervorgerufen werden. Vorteilhaft weisen die metallischen Nanopartikel eine größte Abmessung zwischen 2 nm und 400 nm, bevorzugt zwischen 5 nm und 300 nm und besonders bevorzugt zwischen 10 nm und 200 nm auf. Die metallischen Nanopartikel können im Wesentlichen kugelförmig ausgebildet sein, können aber auch mit einer Vorzugsrichtung, insbesondere als Rotationsellipsoide oder in Stäbchen- oder Plättchenform ausgebildet sein. In einer vorteilhaften Ausgestaltung sind die metallischen Nanopartikel aus homogenen metallischen Partikeln gebildet, insbesondere aus Au-, Ag-, Cu- oder Al-Partikeln, da bei diesen Farbeffekte im sichtbaren Spektralbereich beobachtbar sind. Daneben kommen auch andere Metalle in Betracht, wie etwa Ni, Cr, Wo, Vd, Pd und Pt, sowie Legierungen eines oder mehrere der genannten Metalle. Alternativ können die metallischen Nanopartikel aus Kern-Hülle-Partikeln gebildet sein, bei denen eines der Materialien von Kern und Hülle ein Metall, insbesondere Au, Ag, Cu, Al, ein anderes der oben genannte Metalle oder eine Metalllegierung ist. Das andere der Materialien von Kern und Hülle ist vorteilhaft ebenfalls ein Metall oder ein Dielektrikum. Weitere Einzelheiten zur Gestaltung und Eigenschaften dieser metallischen Nanopartikel können der Anmeldung PCT/EP2008/010747 entnommen werden, deren Offenbarungsgehalt insoweit in die vorliegende Anmeldung aufgenommen wird.

Das Aufbringen der Farbe auf die Mikrostruktur kann neben den herkömmlichen, dem Fachmann bekannten Verfahren auch durch das in der Anmeldung PCT/EP2008/010739 beschriebene Übertragungsverfahren erfolgen, bei dem mit einem Druckwerkzeug ein Aufdruckstoff auf die Mikrostruktur übertragen wird, wobei die Viskosität des Aufdruckstoffs so gewählt wird, dass der Aufdruckstoff selektiv im Wesentlichen nur in die Vertiefungen der Reliefstruktur übertragen wird. Als Aufdruckstoff wird dabei insbesondere ein niedrigviskoser Aufdruckstoff gewählt, wobei bei der Auswahl die Oberflächenspannung des Aufdruckstoffs mit Vorteil auf die Oberflächenenergie der Mikrostruktur abgestimmt wird. Insbesondere kommen Aufdruckstoffe mit einer Viskosität zwischen etwa 3 mPa*s und etwa 1500 mPa*s bei Zimmertemperatur in Betracht. Für eine ausführlichere Darstellung dieses Farbübertragungsverfahrens und der damit verbundenen Vorteile wird auf die Anmeldung PCT/EP2008/010739 verwiesen, deren Offenbarungsgehalt insoweit in die vorliegende Anmeldung aufgenommen wird.

Bei einer alternativen, ebenfalls vorteilhaften Erfindungsvariante kann für die Herstellung der Anordnung farbiger Mikromotivelemente auf der zweiten Trägerfolie in Schritt T2) die in der Druckschrift WO 2008/000350 beschriebene Mikrotiefdrucktechnik zum Einsatz kommen, die die Vorteile von Druck- und Prägetechnologien vereint. Kurz zusammengefasst wird bei der Mikrotiefdrucktechnik eine Werkzeugform bereitgestellt, deren Oberfläche eine Anordnung von Erhebungen und Vertiefungen in Gestalt einer gewünschten Mikrostruktur aufweist. Die Vertiefungen der Werkzeugform werden mit einem härtbaren farbigen Lack befüllt, und die zu bedruckende Trägerfolie wird für eine gute Verankerung des Lacks vorbehandelt. Dann wird die Oberfläche der Werkzeugform mit der Trägerfolie in Kontakt gebracht und der in Kontakt mit der Trägerfolie stehende Lack in den Vertiefungen der Werkzeugform gehärtet und dabei mit der Trägerfolie verbunden. Anschließend wird die Oberfläche der Werkzeugform wieder von der Trägerfolie entfernt, so dass der mit der Trägerfolie verbundene, gehärtete Lack aus den Vertiefungen der Werkzeugform gezogen wird und die Mikromotivelemente auf der zweiten Trägerfolie bildet. Für eine ausführlichere Darstellung des Mikrotiefdruckverfahrens und der damit verbundenen Vorteile wird auf die genannte Druckschrift WO 2008/000350 verwiesen, deren Offenbarungsgehalt insoweit in die vorliegende Anmeldung aufgenommen wird.

In einer bevorzugten Erfindungsvariante wird in Schritt K) ein transparenter Kaschierkleber auf die das Motivraster aufweisende erste Hauptfläche der zweiten Trägerfolie aufgebracht und die zweite Trägerfolie wird mit ihrer ersten Hauptfläche auf die zweite Hauptfläche der ersten Trägerfolie aufkaschiert. Alternativ kann auch ein transparenter Kaschierkleber auf die dem Fokussierelementraster gegenüberliegende zweite Hauptfläche der ersten Trägerfolie aufgebracht und die zweite Trägerfolie mit ihrer das Motivraster aufweisenden ersten Hauptfläche auf die zweite Hauptfläche der ersten Trägerfolie aufkaschiert werden. Das Auftragsgewicht und damit die aufgetragene Dicke des transparenten Kaschierklebers werden in beiden Varianten entsprechend des gewünschten Abstands von Fokussierelementraster und Motivraster gewählt.

Die zweite Trägerfolie kann nach dem Aufkaschieren auf die erste Trägerfolie abgezogen werden, so dass das Fokussierelementraster und das Motivraster auf gegenüberliegenden Seiten einer einzigen Trägerfolie vorliegen. Der Kaschierkleber kann in Schritt K) auch nur partiell aufgetragen werden, so dass nach dem Abziehen der zweiten Trägerfolie ein Teil der Mikrostrukturen auf der ersten Trägerfolie verbleibt, während die Mikrostrukturen in den nicht mit Kaschierkleber versehenen Bereichen zusammen mit der zweiten Trägerfolie abzogen werden.

Nach dem Abziehen der zweiten Trägerfolie kann die dann freiliegende Oberfläche mit einer Druckschicht oder einer Metallisierung versehen werden. Alternativ wird der Prägelack in Schritt T2P) auf der zweiten Trägerfolie verankert, und die zweite Trägerfolie verbleibt dauerhaft in der mikrooptischen Darstellungsanordnung. In diesem Fall wird in Schritt T2) als Trägerfolie vorzugsweise eine Kunststofffolie, insbesondere eine PET-Folie mit einer Schichtdicke zwischen 6 µm und 23 µm, vorzugsweise von etwa 12 µm bereitgestellt, um die Schichtdicke der gesamten Anordnung nicht zu groß werden zu lassen.

Nach dem Aufkaschieren liegen die farbigen Mikrostrukturen innen zwischen der auf die zweite Trägerfolie aufgebrachten Prägelackschicht und der der zweiten Trägerfolie selbst und der ersten Trägerfolie, so dass sie ausgezeichnet gegen äußere Einflüsse geschützt sind.

Nach einer anderen, ebenfalls bevorzugten Erfindungsvariante wird in Schritt K) ein transparenter Kaschierkleber auf die dem Motivraster gegenüberliegende zweite Hauptfläche der zweiten Trägerfolie aufgebracht und die zweite Trägerfolie wird mit ihrer zweiten Hauptfläche auf die zweite Hauptfläche der ersten Trägerfolie aufkaschiert. Alternativ kann auch ein transparenter Kaschierkleber auf die dem Fokussierelementraster gegenüberliegende zweite Hauptfläche der ersten Trägerfolie aufgebracht und die zweite Trägerfolie mit ihrer dem Motivraster gegenüberliegende zweite Hauptfläche auf die zweite Hauptfläche der ersten Trägerfolie aufkaschiert werden. In dieser Erfindungsvariante ist die Leserichtung der Mikrostrukturen gekontert. Sowohl die farbigen Mikrostrukturen als auch das Fokussierelementraster liegen außen auf dem Kaschierverbund auf.

In den genannten Erfindungsvarianten kann in Schritt T2F) insbesondere eine Farbe auf Basis löslicher Farbstoffe, eine Farbe auf Basis von Farbpigmenten oder eine Farbe auf Basis eines Lackträgers mit metallischen Nanopartikeln auf die geprägten Mikrostrukturen aufgebracht werden. Entsteht beim Aufbringen der Farbe in den erhabenen Bereichen außerhalb der geprägten Mikrostrukturen ein Farbüberschuss, so wird dieser Farbüberschuss zweckmäßig vor der Weiterverarbeitung entfernt, beispielsweise abgerakelt. Beim Entfernen des Farbüberschusses kann in der Praxis ein sehr dünner Tonungsfilm in den erhabenen Bereichen verbleiben, der jedoch den visuellen Eindruck dieser Bereiche sowie der geprägten Mikrostrukturen weitgehend unbeeinträchtigt lässt.

Ferner kann auch der auf die zweite Trägerfolie aufgebrachte Prägelack in den genannten Erfindungsvarianten farbig ausgestaltet sein. Die Farbe des Prägelacks und die Farbe der Füllung der geprägten Mikrostrukturen sind dabei zweckmäßig so gewählt, dass ein wahrnehmbarer Kontrast zwischen den gefüllten Vertiefungen der geprägten Mikrostrukturen zu dem umgebenden Prägelack erzeugt wird. Auf diese Weise lassen sich zweifarbige mikrooptische Darstellungsanordnungen erhalten. Zum Aufkaschieren der zweiten Trägerfolie auf die zweite Hauptfläche der ersten Trägerfolie in Schritt K) wird vorzugsweise ein transparenter Kaschierkleber gewählt.

Nach einer anderen Erfindungsvariante ist vorgesehen, dass in Schritt T2F) zumindest ein farbiger Kaschierkleber auf die das Motivraster aufweisende erste Hauptfläche der zweiten Trägerfolie aufgebracht wird, der die Mikrostrukturen füllt und der dem Aufkaschieren der zweiten Trägerfolie in Schritt K) dient. Alternativ kann auch zumindest ein farbiger Kaschierkleber auf die dem Fokussierelementraster gegenüberliegende zweite Hauptfläche der ersten Trägerfolie aufgebracht, und in Schritt K) die zweite Trägerfolie mit ihrer das Motivraster aufweisenden ersten Hauptfläche auf die zweite Hauptfläche der ersten Trägerfolie aufkaschiert werden, wobei der dort aufgebrachte farbige Kaschierkleber die Mikrostrukturen der zweiten Trägerfolie füllt. Das Auftragsgewicht des zumindest einen farbigen Kaschierklebers wird in beiden Varianten zweckmäßig so gewählt, dass die geprägten Mikrostrukturen vollständig gefüllt werden und dass der Kaschierkleber im Bereich außerhalb der Mikrostrukturen in einer geringen Schichtdicke, insbesondere einer Schichtdicke von 3 µm oder weniger, vorzugsweise von 2 µm oder weniger, und besonders bevorzugt von etwa 1 µm vorliegt. Auf diese Weise wird ein ausreichend hoher Kontrast zwischen den gefüllten Vertiefungen der Mikrostrukturen und den umgebenden Bereichen sichergestellt. In einer vorteilhaften Erfindungsvariante ist dabei nur ein einziger farbiger Kaschierkleber vorgesehen, der sowohl die Funktion der Farbgebung für die Mikrostrukturen als auch die Funktion der Verbindung der Trägerfolien übernimmt.

Ebenfalls mit Vorteil können jedoch auch mehrere, insbesondere zwei verschiedene Kaschierkleber zum Einsatz kommen. Vorzugsweise wird dabei auf einen ersten, die Mikrostrukturen füllenden, farbigen Kaschierkleber ein zweiter Kaschierkleber aufgebracht, um die Haftung zur zweiten Trägerfolie zu erhöhen. Der zweite Kaschierkleber kann transparent oder ebenfalls farbig sein. Im letzteren Fall können durch die Kombination der beiden farbigen Kaschierkleber nach Wunsch Mischfarben erzeugt werden. Jeder der mehreren Kaschierkleber kann vollflächig oder strukturiert aufgebracht werden, um unterschiedlich gefärbte Bereiche innerhalb der Darstellungsanordnung zu erzeugen. Dabei ist es zweckmäßig, zumindest einen der Kaschierkleber vollflächig aufzubringen, um sicherzustellen, dass innerhalb der Fläche der Darstellungsanordnung keine Lücken ohne Kaschierkleberauftrag entstehen.

Beispielsweise kann ein erster, farbiger Kaschierkleber vollflächig so aufgebracht werden, dass er die Mikrostrukturen füllt und außerhalb der Mikrostrukturen nur in einer sehr geringen Schichtdicke vorliegt. Auf den ersten Kaschierkleber wird dann ein zweiter, farbiger Kaschierkleber aufgebracht, wobei das Auftragsgewicht vorzugsweise entsprechend des gewünschten Abstands von Fokussierelementraster und Motivraster gewählt wird. Wird der zweite Kaschierkleber ebenfalls vollflächig aufgebracht, so ergibt sich bei der Betrachtung aufgrund der geringen Schichtdicke des ersten Kaschierklebers außerhalb der Mikrostrukturen im Wesentlichen die Farbe des zweiten Kaschierklebers, während sich in den Mikrostrukturen die Mischfarbe der beiden Kaschierkleber zeigt. Wird der zweite Kaschierkleber nur bereichsweise aufgetragen, so entstehen unterschiedlich gefärbte Bereiche innerhalb der Darstellungsanordnung.

Auch bei dieser Erfindungsvariante kann die zweite Trägerfolie nach dem Aufkaschieren auf die erste Trägerfolie abgezogen werden, wobei die dann freiliegende Oberfläche mit einer Druckschicht oder einer Metallisierung versehen werden kann. Alternativ wird der Prägelack in Schritt T2P) auf der zweiten Trägerfolie verankert, und die zweite Trägerfolie verbleibt dauerhaft in der mikrooptischen Darstellungsanordnung. In diesem Fall wird in Schritt T2) als Trägerfolie vorzugsweise eine Kunststofffolie, insbesondere eine PET-Folie mit einer Schichtdicke zwischen 6 µm und 23 µm, vorzugsweise von etwa 12 µm bereitgestellt, um die Schichtdicke der gesamten Anordnung nicht zu groß werden zu lassen.

Um zweifarbige mikrooptische Darstellungsanordnungen zu erhalten, kann auch bei dieser Erfindungsvariante der auf die zweite Trägerfolie aufgebrachte Prägelack farbig sein. Die Farbe des Prägelacks und die Farbe des farbigen Kaschierklebers sind dabei zweckmäßig so gewählt, dass ein wahrnehmbarer Kontrast zwischen den gefüllten Vertiefungen der geprägten Mikrostrukturen zu dem umgebenden Prägelack erzeugt wird.

In allen genannten Erfindungsvarianten wird in Schritt T1) als Trägerfolie vorzugsweise eine Kunststofffolie, insbesondere eine PET-Folie mit einer Schichtdicke zwischen 6 µm und 60 µm, vorzugsweise zwischen 6 µm und 36 µm bereitgestellt. Als Prägelack wird in Schritt T1) bevorzugt ein thermoplastischer oder strahlungshärtender Lack aufgebracht. Strahlungshärtende Lackschichten können sowohl durch UV-Bestrahlung als auch durch Elektronenbestrahlung härtbar sein. Die Schichtdicke der in Schritt T1) aufgebrachten Prägelackschicht liegt bevorzugt zwischen 1 µm und 15 µm, besonders bevorzugt zwischen 5 µm und 10 µm.

Um ein gewünschtes visuelles Erscheinungsbild zu erhalten, kann die zweite Hauptfläche der ersten Trägerfolie vor dem Kaschierschritt K) mit einer partiellen Metallisierung versehen werden. Die partielle Metallisierung kann dabei als Teil eines Hologramms oder eines Dünnschichtelements mit Farbkippeffekt erzeugt werden.

Zusätzlich zu dem auf der ersten Hauptfläche der zweiten Trägerfolie bereitgestellten Motivraster kann auch die zweite Hauptfläche der ersten Trägerfolie vor dem Kaschierschritt K) mit zumindest einem weiteren Motivraster aus einer Anordnung von zweiten Mikromotivelementen versehen werden, die bei Betrachtung des Motivrasters durch das Fokussierelementraster ein zweites vorgegebenes Motiv rekonstruieren, und beispielsweise im Fall einer Moire-Vergrößerungsanordnung Moire-vergrößert in Erscheinung treten. Die zweiten Mikromotivelemente sind vorzugsweise farbig ausgestaltet. Unterscheidet sich die Farbe der zweiten Mikromotivelemente des zweiten Motivrasters von der Farbe der Füllung der geprägten Mikrostrukturen des ersten Motivrasters, so kann eine zweifarbige mikrooptische Darstellungsanordnung erhalten werden. Bei Verwendung eines auf die zweite Trägerfolie aufgebrachten farbigen Prägelacks können auf diese Weise sogar dreifarbige Ausgestaltungen realisiert werden. Mehrfarbige mikrooptische Darstellungsanordnungen können auch durch eine Kombination mit einem zweiten, farbigen Kaschierkleber erhalten werden, wie oben näher beschrieben.

Um die Erkennbarkeit der geprägten Mikrostrukturen der zweiten Trägerfolie bei Betrachtung dieser durch das Fokussierelementraster nicht zu beeinträchtigen, müssen zumindest die die zweiten Mikromotivelemente umgebenden Bereiche ausreichend transparent sein.

Mit Vorteil werden die zweiten Mikromotivelemente auf die zweite Hauptfläche der ersten Trägerfolie aufgedruckt. Alternativ werden in eine auf die zweite Hauptfläche der ersten Trägerfolie aufgebrachte Schicht aus Prägelack zweite Mikrostrukturen geprägt, deren Formen den gewünschten zweiten Mikromotivelementen entsprechen. Die geprägten zweiten Mikrostrukturen können mit einer Farbe gefüllt werden, wobei als Farbe grundsätzlich jedes Material verwendet werden kann, das einen wahrnehmbaren Kontrast zu dem umgebenden Prägelack erzeugt. Bei Verwendung eines farbigen Prägelacks ist zu beachten, dass dieser zumindest in den die zweiten Mikromotivelemente umgebenden Bereichen eine ausreichende Transparenz aufweist.

In einer vorteilhaften Ausgestaltung kann die Farbe der Füllung der geprägten zweiten Mikrostrukturen auch durch den in Schritt T2F) auf die erste Hauptfläche der zweiten Trägerfolie aufgebrachten farbigen Kaschierkleber bereitgestellt werden. Das Auftragsgewicht des farbigen Kaschierklebers wird zweckmäßig so gewählt, dass sowohl die geprägten Mikrostrukturen des ersten Motivrasters als auch die geprägten Mikrostrukturen des zweiten Motivrasters vollständig gefüllt werden und dass der Kaschierkleber im Bereich außerhalb der Mikrostrukturen in einer geringen Schichtdicke vorliegt. Dabei kann nur ein einziger farbiger Kaschierkleber aufgebracht werden, oder es können mehrere, insbesondere zwei verschiedene Kaschierkleber zum Einsatz kommen, so dass Mischfarben und/oder unterschiedlich gefärbte Bereiche innerhalb der Darstellungsanordnung erzeugt werden können.

Sowohl die Motive als auch die gewünschten Modulo- oder Moire-Vergrößerungseffekte der ersten und zweiten Mikromotivelemente können unabhängig voneinander ausgestaltet sein. Alternativ können die Motive des ersten und zweiten Motivrasters auch in einem Sinnzusammenhang stehen.

In Schritt T2P) wird als Prägelack beispielsweise ein thermoplastischer, vorzugsweise aber ein strahlungshärtender Lack aufgebracht, wobei sowohl UV-härtbare als auch elektronstrahlhärtbare Lacke infrage kommen. Der Prägelack wird vorzugsweise in einer Schichtdicke zwischen 1 µm und 15 µm, bevorzugt zwischen 4 µm und 8 µm aufgebracht.

In vorteilhaften Ausgestaltungen werden die Mikrostrukturen der zweiten Trägerfolie mit einer Strukturtiefe zwischen etwa 1 µm und etwa 20 µm, vorzugsweise zwischen etwa 1 µm und etwa 10 µm gebildet. Die Mikromotivelemente werden vorzugsweise mit einer lateralen Abmessung zwischen etwa 5 µm und etwa 50 µm, vorzugsweise zwischen etwa 10 µm und etwa 35 µm erzeugt.

Die mikrooptische Darstellungsanordnung kann weiter mit einer oder mehreren Funktionsschichten für den Einsatz als Sicherheitselement für Sicherheitspapiere, Wertdokumente und dergleichen ausgestattet werden, insbesondere mit einer Heißsiegelausstattung, mit Schutzschichten, Deckschichten, Klebeschichten oder Schichten mit visuell und/oder maschinell erfassbaren Sicherheitsmerkmalen.

Die Erfindung enthält auch einen Gegenstand, insbesondere einen Datenträger oder ein Sicherheitselement, mit einer in der beschriebenen Art erzeugten mikrooptischen Darstellungsanordnung.

Nach einer bevorzugten Ausgestaltung enthält die mikrooptische Darstellungsanordnung nur eine einzige Trägerfolie, wobei das Fokussierelementraster auf einer ersten Hauptfläche der Trägerfolie und das farbige Motivraster in einer Prägelackschicht auf der gegenüberliegenden zweiten Hauptfläche der Trägerfolie angeordnet sind. Das farbige Motivraster ist innen zwischen der Prägelackschicht und der einzigen Trägerfolie angeordnet und daher gut geschützt. Das farbige Motivraster ist insbesondere durch Vertiefungen der Prägelackschicht gebildet, die mit einer Farbe auf Basis löslicher Farbstoffe oder auf Basis von Farbpigmenten gefüllt sind. Alternativ kann das farbige Motivraster auch durch Vertiefungen der Prägelackschicht gebildet sein, die mit einem farbigen Kaschierkleber gefüllt sind.

Nach einer anderen bevorzugten Ausgestaltung enthält die mikrooptische Darstellungsanordnung eine erste und eine zweite Trägerfolie, zwischen denen in einer Prägelackschicht das farbige Motivraster vorliegt, und bei der das Fokussierelementraster auf einer außen liegenden Hauptfläche einer der Trägerfolien angeordnet ist. Das farbige Motivraster ist bei dieser Ausgestaltung insbesondere durch Vertiefungen der Prägelackschicht gebildet, die mit einem farbigen Kaschierkleber gefüllt sind.

Bei einer weiteren, ebenfalls bevorzugten Ausgestaltung enthält die mikrooptische Darstellungsanordnung zwei aufeinanderkaschierte Trägerfolien, wobei das farbige Motivraster auf der außen liegenden Hauptfläche einer der Trägerfolien und das Fokussierelementraster auf der außen liegenden Hauptfläche der anderen der Trägerfolien angeordnet ist.

Bei allen genannten Ausgestaltungen kann die das farbige Motivraster enthaltende Prägelackschicht selbst farbig ausgestaltet sein. In vorteilhaften Ausgestaltungen kann zusätzlich zu dem farbigen Motivraster in der Prägelackschicht zumindest ein weiteres farbiges Motivraster auf der zweiten Hauptfläche der das Fokussierelementraster tragenden Trägerfolie angeordnet sein.

In allen Gestaltungen weist die mikrooptische Darstellungsanordnung mit Vorteil ein Motivraster mit Mikromotivelementen auf, deren Strichstärke zwischen etwa 1 µm und etwa 10 µm liegt und/oder deren Strukturtiefe zwischen etwa 1 µm und etwa 20 µm, vorzugsweise zwischen etwa 1 µm und etwa 10 µm liegt. Die lateralen Abmessungen der Mikromotivelemente liegen vorzugsweise zwischen etwa 5 µm und etwa 50 µm, insbesondere zwischen etwa 10 µm und etwa 35 µm.

In einer bevorzugten Ausgestaltung stellt der Gegenstand ein Sicherheitselement, insbesondere einen Sicherheitsfaden, ein Etikett oder ein Transferelement zum Aufbringen auf einen Datenträger dar. Das Sicherheitselement kann dazu beispielsweise heißsiegelfähig ausgestattet sein. Die Gesamtdicke des Sicherheitselements liegt zweckmäßig zwischen etwa 20 µm und etwa 60 µm, vorzugsweise zwischen etwa 30 µm und etwa 50 µm. Es ist ebenfalls vorteilhaft, wenn der Gegenstand ein Datenträger, insbesondere eine Banknote, ein Wertdokument, ein Pass, eine Ausweiskarte oder eine Urkunde ist.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit einem eingebetteten Sicherheitsfaden und einem aufgeklebten Transferelement,
- Fig. 2: schematisch den Schichtaufbau eines erfindungsgemäßen Sicherheitsfadens im Querschnitt,
- Fig.3: in (a) bis (f) Zwischenschritte bei der Herstellung einer erfindungsgemäßen Moire-Vergrößerungsanordnung,
- Fig. 4: eine Erfindungsvariante, bei der die zweite Trägerfolie dauerhaft in der Moire-Vergrößerungsanordnung verbleibt,
- Fig.5: in (a) und (b) Zwischenschritte bei der Herstellung einer Moire-Vergrößerungsanordnung nach einem weiteren Ausführungsbeispiel der Erfindung,
- Fig.6: in (a) bis (d) Zwischenschritte bei der Herstellung einer Moire-Vergrößerungsanordnung nach noch einem weiteren Ausführungsbeispiel der Erfindung, und
- Fig.7: eine Abwandlung der Variante der Fig. 6, bei der die zweite Trägerfolie dauerhaft in der Moire-Vergrößerungsanordnung verbleibt.

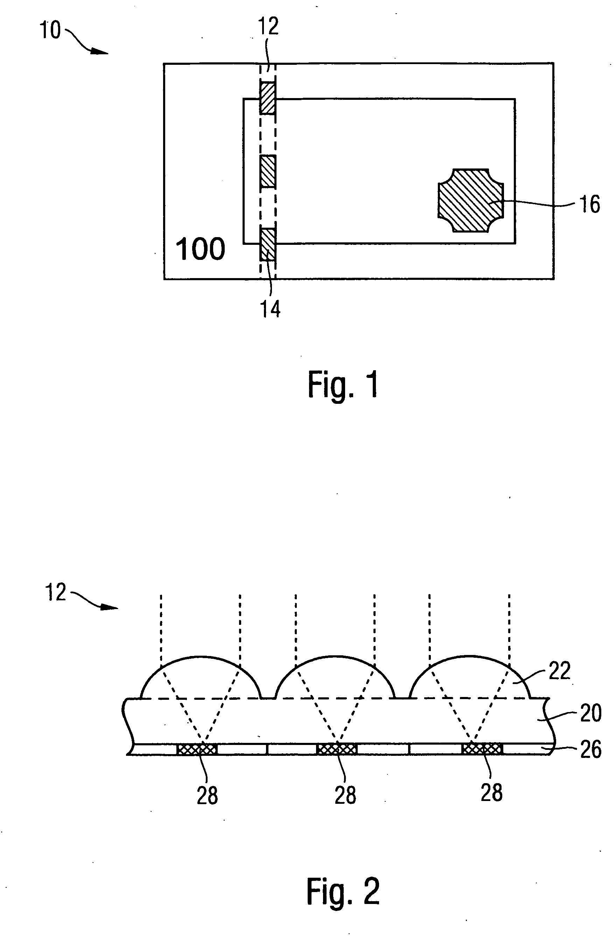

Die Erfindung wird nun am Beispiel eines Sicherheitselements für eine Banknote erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der in bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie ausgebildet sein, die über einem Fensterbereich oder einer durchgehenden Öffnung der Banknote angeordnet ist.

Sowohl der Sicherheitsfaden 12 als auch das Transferelement 16 können eine mikrooptische Darstellungsanordnung nach einem Ausführungsbeispiel der Erfindung enthalten. Wie oben näher erläutert, kann eine derartige mikrooptische Darstellungsanordnung insbesondere als Moire-Vergrößerungsanordnung, als mikrooptische Vergrößerungsanordnung vom Moiretyp oder als Modulo-Vergrößerungsanordnung ausgebildet sein. Die Funktionsweise und das erfindungsgemäße Herstellungsverfahren für derartige Anordnungen werden im Folgenden anhand des Sicherheitsfadens 12 mit einer Moire-Vergrößerungsanordnung näher beschrieben.

Fig. 2 zeigt schematisch den Schichtaufbau des Sicherheitsfadens 12 im Querschnitt, wobei nur die für die Erläuterung des Funktionsprinzips erforderlichen Teile des Schichtaufbaus dargestellt sind. Der Sicherheitsfaden 12 enthält einen Träger 20 in Form einer transparenten Kunststofffolie, im Ausführungsbeispiel einer etwa 20 µm dicke Polyethylenterephthalat(PET)-Folie. Die Oberseite der Trägerfolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Das Bravais-Gitter kann beispielsweise eine hexagonale Gittersymmetrie aufweisen, bevorzugt ist wegen der höheren Fälschungssicherheit jedoch eine niedrigere Symmetrie und damit eine allgemeinere Form, insbesondere die Symmetrie eines Parallelogramm-Gitters.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen vorzugsweise einen Durchmesser zwischen 5 µm und 50 µm und insbesondere einen Durchmesser zwischen lediglich 10 µm und 35 µm auf und sind daher mit bloßem Auge nicht zu erkennen.

Auf der Unterseite der transparenten Kunststofffolie 20 ist eine Motivschicht 26 angeordnet, die eine ebenfalls rasterförmige Anordnung von identischen Mikromotivelementen 28 enthält. Auch die Anordnung der Mikromotivelemente 28 bildet ein zweidimensionales Bravais-Gitter mit einer vorgewählten Symmetrie, beispielsweise mit hexagonaler Gittersymmetrie oder der Symmetrie eines Parallelogramm-Gitters.

Wie in Fig. 2 durch den Versatz der Mikromotivelemente 28 gegenüber den Mikrolinsen 22 angedeutet, unterscheidet sich das Bravais-Gitter der Mikromotivelemente 28 in seiner Symmetrie und/oder in der Größe seiner Gitterparameter erfindungsgemäß geringfügig von dem Bravais-Gitter der Mikrolinsen 22, um den gewünschten Moire-Vergrößerungseffekt zu erzeugen. Die Gitterperiode und der Durchmesser der Mikromotivelemente 28 liegen dabei in derselben Größenordnung wie die der Mikrolinsen 22, also im Bereich von 5 µm bis 50 µm, insbesondere im Bereich von 10 µm bis 35 µm, so dass auch die Mikromotivelemente 28 mit bloßem Auge nicht zu erkennen sind.

Die optische Dicke der Trägerfolie 20 und die Brennweite der Mikrolinsen 22 sind so aufeinander abgestimmt, dass sich die Motivschicht 26 und damit die Mikromotivelemente 28 etwa im Abstand der Linsenbrennweite befinden. Aufgrund der sich geringfügig unterscheidenden Gitterparameter sieht der Betrachter bei Betrachtung von oben durch die Mikrolinsen 22 hindurch jeweils einen etwas anderen Teilbereich der Mikromotivelemente 28, so dass die Vielzahl der Mikrolinsen 22 insgesamt ein vergrößertes Bild der Mikromotivelemente 28 erzeugt. Die sich ergebende Moire-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so ergibt sich eine 100-fache Moire-Vergrößerung. Für eine ausführlichere Darstellung der Funktionsweise und für vorteilhafte Anordnungen der Motivraster und der Mikrolinsenraster wird auf die Druckschriften DE 10 2005 062132 A1 und WO 2007/076952 A2 verwiesen, deren Offenbarungsgehalt insoweit in die vorliegende Anmeldung aufgenommen wird.

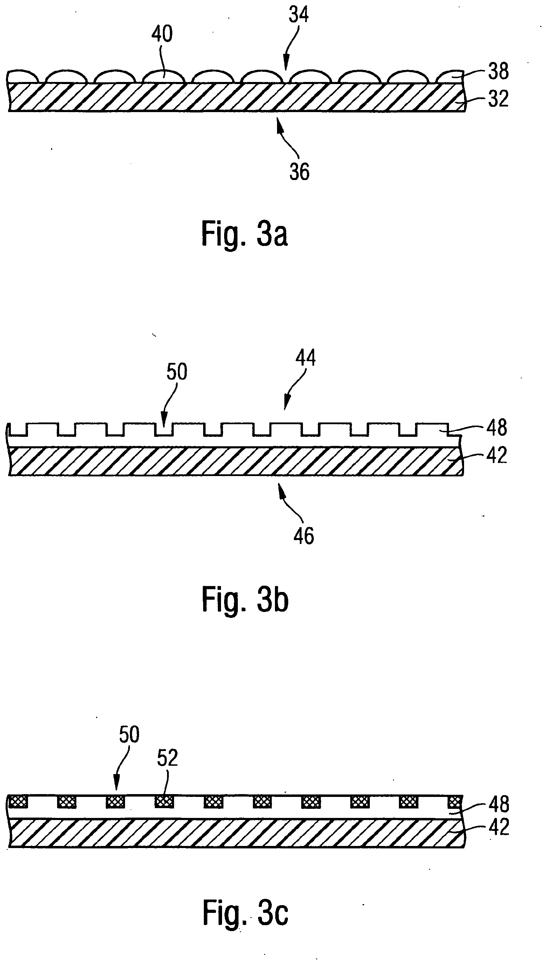

Die Herstellung einer erfindungsgemäßen Moiré-Vergrößerungsanordnung 30 wird nun mit Bezug auf die Figuren 3(a) bis (f) näher erläutert. Wie in Fig. 3(a) dargestellt, wird zunächst in einem Schritt T1) eine erste Trägerfolie 32 mit gegenüberliegenden Hauptflächen 34, 36 bereitgestellt. Auf eine erste Hauptfläche 34 der ersten Trägerfolie 32 wird eine Prägelackschicht 38 aus einem thermoplastischen oder strahlungshärtenden Lack aufgebracht und in die Prägelackschicht 38 wird eine gewünschte Rasteranordnung von Mikrolinsen 40 eingeprägt.

Die Schichtdicke des Prägelacks 38 wird dabei an die Größe der zu prägenden Mikrolinsen 40 angepasst und liegt typischerweise zwischen 1 µm und 15 µm, insbesondere zwischen 5 µm und 10 µm. Um sicherzustellen, dass die geprägte Mikrolinsenanordnung 40 nach dem Prägen fest auf der Trägerfolie 32 verankert ist, wird eine geeignete Kombination von Prägelack 38 und Trägerfolie 32 mit haftvermittelnder Vorbeschichtung eingesetzt. Eine solche Haftvermittlerschicht kann bereits bei der Folienherstellung aufgebracht sein oder vor dem Auftragen des Prägelacks aufgedruckt werden. Als Trägerfolien 32 kommen thermisch-mechanisch stabile Folien, insbesondere PET-Folien, mit einer Stärke von 6 µm bis 60 µm, insbesondere zwischen 6 µm und 36 µm in Betracht.

Um das visuelle Erscheinungsbild des fertigen Sicherheitselements nach Wunsch zu gestalten, kann die dem Mikrolinsenraster 40 gegenüberliegende zweite Hauptfläche 36 der Trägerfolie 32 auch mit einer partiellen Metallisierung versehen werden, wobei alle bekannten Metalle und Demetallisierungsvarianten infrage kommen. Die zweite Hauptfläche 36 kann auch mit einem Hologramm oder einem Dünnschichtelement mit Farbkippeffekt versehen sein, wobei diese Elemente nach einer partiellen Demetallisierung ihrer Metallschicht(en) bei Betrachtung von der ersten Hauptfläche 34 her ausschnittsweise zu erkennen sind.

Neben der ersten Trägerfolie 32 wird in einem Schritt T2) eine zweite Trägerfolie 42 mit gegenüberliegenden Hauptflächen 44, 46 bereitgestellt und auf eine erste Hauptfläche 44 der zweiten Trägerfolie 42 wird eine Prägelackschicht 48 aus einem strahlungshärtenden Lack aufgebracht. Dann wird in die Prägelackschicht 48 ein gewünschtes Motivraster aus Mikroelementen 50 eingeprägt, wie in Fig. 3(b) gezeigt.

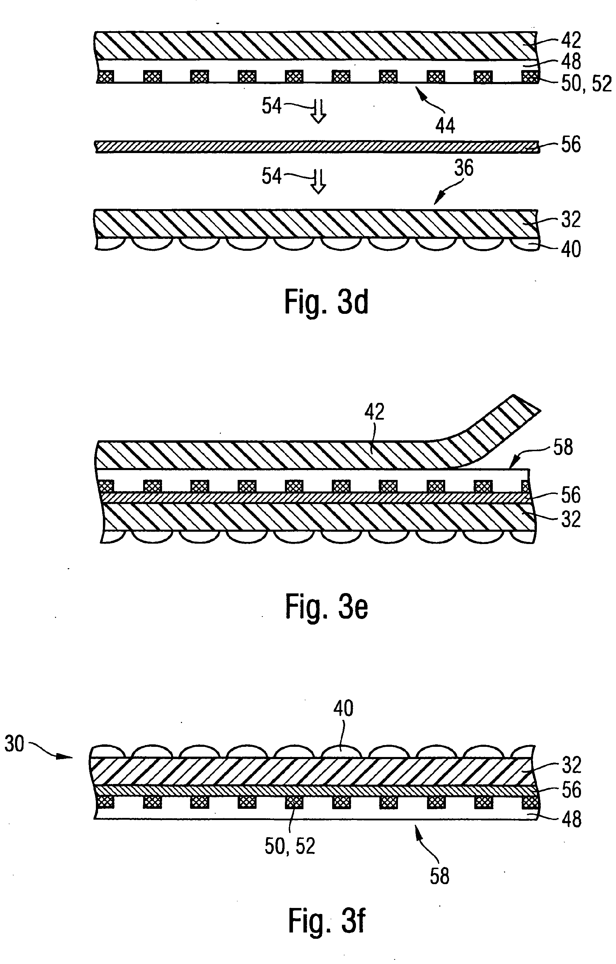

Die Schichtdicke des Prägelacks 48 liegt typischerweise zwischen 1 µm und 15 µm, insbesondere zwischen 4 µm und 8 µm. Die Kombination aus Prägelack 48 und zweiter Trägerfolie 42 sowie die Prozessparameter beim Aushärten des geprägten Lacks werden dabei so eingestellt, dass der gehärtete, geprägte Lack in einem späteren Verfahrensschritt (Fig. 3(e)) vollflächig von der Trägerfolie 42 ablösbar ist, er sich aber in den zunächst folgenden Schritten nicht von selbst von der Trägerfolie 42 löst.

Dann wird auf die geprägte Lackschicht 48, 50 in einem Schritt F) eine Farbe 52 aufgetragen, die die Vertiefungen der eingeprägten Mikrostrukturen 50 füllt. Die Farbe 52 kann auf Basis löslicher Farbstoffe oder auf Basis von Farbpigmenten aufgebaut sein. Bei manchen Auftragungsarten kann außerhalb der Vertiefungen der Mikrostrukturen 50 ein Farbüberschuss entstehen. Ein solcher Farbüberschuss wird vor der Weiterverarbeitung, beispielsweise mit einer Tiefdruckrakel, entfernt. Nach dem Aufbringen der Farbe 52 und einem gegebenenfalls notwendigen Entfernen eines Farbüberschusses, liegt auf der zweiten Trägerfolie 42 die in Fig. 3(c) gezeigte Schichtenfolge vor, bei der nur die geprägten Vertiefungen der Mikrostrukturen 50 mit Farbe 52 gefüllt sind.

Die so erhaltene zweite Folie 42 mit den geprägten und mit Farbe gefüllten Mikrostrukturen 50 wird nun in einem Schritt K) mit ihrer ersten Hauptfläche 44, also mit der mit Mikrostrukturen 50 versehenen Seite voraus, auf die zweite Hauptfläche 36 der ersten Trägerfolie 32, also die dem Mikrolinsenraster 40 gegenüberliegende Folienseite aufkaschiert, wie in Fig. 3(d) durch die Pfeile 54 schematisch dargestellt. Dazu kann beispielsweise ein transparenter Kaschierkleber 56 auf die mit Mikrostrukturen 50 versehene Seite der zweiten Trägerfolie 42 aufgedruckt werden. Durch Variation des Auftragsgewichts kann die Dicke der Kleberschicht 56 gezielt eingestellt werden, so dass durch eine genaue Fokussierung der Mikrolinsen 40 auf die Mikrostrukturen 50, 52 eine scharfe, Moire-vergrößerte Abbildung der Mikrostrukturen 50, 52 erhalten werden kann.

Anschließend wird, wie in Fig. 3(e) gezeigt, die zweite Trägerfolie 42 von dem entstandenen Schichtverbund abgezogen, um die in Fig. 3(f) dargestellte Schichtenfolge 30 zu erhalten. Es versteht sich, dass zur Vervollständigung und Fertigstellung des Sicherheitsfadens 12 weitere an sich bekannte Verfahrensschritte durchgeführt werden. Insbesondere kann die nach dem Abziehen der zweiten Trägerfolie 42 freiliegende, glatte Oberfläche 58 des Prägelacks nach Wunsch mit farbigen Druckschichten oder partiellen Metallisierungen versehen werden. Auch wird die Schichtenfolge 30 zur Erzeugung eines Sicherheitsfadens auf ihrer glatten Seite mit einem Heißsiegelkleber und bedarfsweise einem Deckweißdruck für eine seitenrichtige Einbringung ins Banknotenpapier ausgerüstet. Auch das Aufbringen fluoreszierender Lacke ist auf dieser Seite möglich.

Wie in Fig. 3(f) zu erkennen, liegen die farbigen Mikrostrukturen 50, 52 bei der Schichtenfolge 30 und entsprechend auch im fertigen Sicherheitsfaden 12 innen zwischen der Prägelackschicht 48 und der ersten Trägerfolie 32, so dass sie sehr gut gegen äußere Einflüsse geschützt sind.

Bei der Kaschierung kann durch eine vorher erfolgte Einstellung der Drucklängen der beiden Folien 32, 42 zueinander und durch geeignete Verdrehung der mit Kaschierkleber 56 bedruckten zweiten Trägerfolie 42 und /oder der zulaufenden ersten Trägerfolie 32 vor dem Kaschierwerk durch ein Einschwenkwalzensystem die Abbildung der Mikrostrukturen 50, 52 durch die geprägten Mikrolinsen 40 bei Bedarf nachgeregelt werden. Einzelheiten zu einem solchen Einschwenkwalzensystem sind in der ebenfalls anhängigen deutschen Patentanmeldung DE 10 2007 063 277.2 beschrieben, deren Offenbarung insoweit in die vorliegende Beschreibung aufgenommen wird.

Der Kaschierkleber 56 kann auch nur partiell aufgebracht werden, so dass nur ein Teil der geprägten Mikrostrukturen 50, 52 auf die erste Trägerfolie 32 übertragen wird, während die nicht mit Kaschierkleber versehenen Bereiche auf der zweiten Trägerfolie 42 verbleiben und mit dieser abgezogen werden.

Der Schichtaufbau des fertigen Sicherheitsfadens 12 kann zusätzliche Funktionsschichten beinhalten. Neben der bereits erwähnten Heißsiegelausstattung, die der Einbringung bzw. der Applizierung des Sicherheitselements dient, Schutzschichten, Deckschichten oder Klebeschichten, kommen insbesondere Schichten mit visuell und/oder maschinell erfassbaren Sicherheitsmerkmalen, wie etwa voll- oder teilflächig reflektierende, hochbrechende oder farbkippende Schichten, polarisierende oder phasenschiebende Schichten, opake oder transparente leitfähige Schichten, hart- oder weichmagnetische Schichten und fluoreszierende oder phosphoreszierende Schichten infrage. Die gesamte Schichtdicke des Aufbaus liegt typischerweise zwischen 20 µm und 60 µm, wobei Schichtdicken zwischen 30 µm und 50 µm bevorzugt sind.

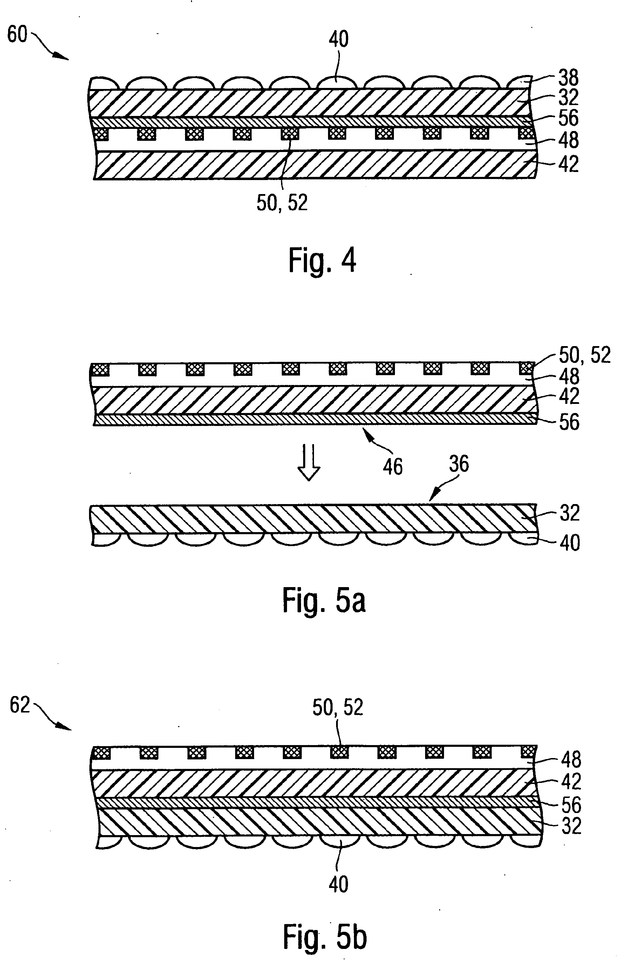

Fig. 4 zeigt eine Erfindungsvariante 60, bei der die zweite Trägerfolie 42 dauerhaft in der Moire-Vergrößerungsanordnung verbleibt. Dazu wird der Prägelack 48 in Schritt T2) auf der zweiten Trägerfolie 42 verankert, so dass sich ein fester, vollflächiger Folienverbund ergibt. Um die Gesamtdicke der Schichtenfolge 60 nicht zu groß werden zu lassen, werden bei dieser Erfindungsvariante vorzugsweise zweite Trägerfolien mit einer Foliendicke von 6 µm bis 23 µm, insbesondere von etwa 12 µm eingesetzt. Nach dem Kaschierschritt K) sind die geprägten Mikrostrukturen 50, 52 im Fadenverbund einkaschiert, die Mikrolinsen 40 sitzen außen auf.

Bei der in Fig. 5 dargestellten Abwandlung 62 erfolgt die Bearbeitung der ersten und zweiten Trägerfolie 32, 42 zunächst wie bei der Erfindungsvariante 60 der Fig. 4. Allerdings wird im Kaschierschritt K) die Leserichtung der Mikrostrukturen 50, 52 gekontert und der transparente Kaschierkleber 56 wird auf die dem Motivraster gegenüberliegende zweite Hauptfläche 46 der zweiten Trägerfolie 42 aufgebracht, wie in Fig. 5(a) gezeigt. Dann wird die zweite Trägerfolie 42 mit ihrer zweiten Hauptfläche 46 auf die zweite Hauptfläche 36 der ersten Trägerfolie 32 aufkaschiert, so dass die Kaschierung Folie gegen Folie erfolgt und die in Fig. 5(b) gezeigte Schichtenfolge 62 erhalten wird, bei der die farbigen Mikrostrukturen 50, 52 und die Mikrolinsen 40 jeweils außen auf dem Kaschierverbund aufliegen.

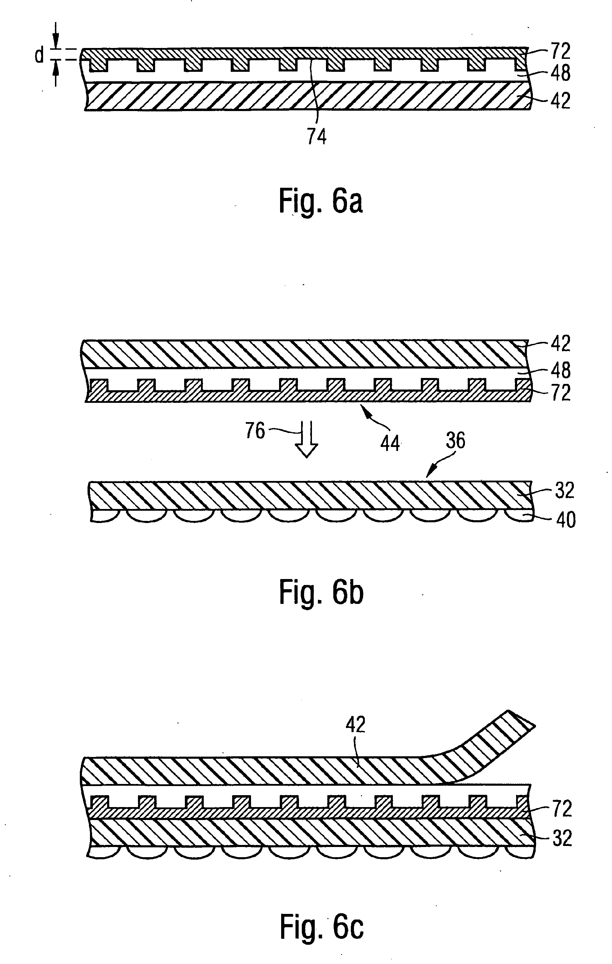

Eine weitere Herstellungsvariante ist in den Figuren 6 (a) bis (d) illustriert. Dabei werden zunächst, wie bereits bei Fig. 3(a) und (b) beschrieben, eine erste Trägerfolie 32 mit einer gewünschten Rasteranordnung aus Mikrolinsen 40 und eine zweite Trägerfolie 42 mit einem gewünschten Motivraster aus Mikroelementen 50 ausgestattet.

Zur Erzeugung eines farbigen Kontrastes der tiefen geprägten Strukturen wird dann, wie in Fig. 6(a) gezeigt, ein farbiger Kaschierkleber 72 auf die geprägte Lackschicht 48, 50 aufgetragen. Der Kaschierkleber 72 wird dabei in einer solchen Menge aufgetragen, dass die Vertiefungen der Mikrostrukturen 50 vollständig gefüllt werden, und der Kaschierkleber darüber hinaus im Bereich der erhabenen Flächen 74 mit einer geringen Schichtdicke d von etwa 1 µm vorliegt.

Die so erhaltene zweite Trägerfolie 42 mit den geprägten und farbig gefüllten Mikrostrukturen wird dann mit ihrer ersten Hauptfläche 44 auf die zweite Hauptfläche 36 der ersten Trägerfolie 32 aufkaschiert (76), wie in Fig. 6(b) gezeigt. Der farbige Kaschierkleber 72 dient bei dieser Erfindungsvariante sowohl der Einfärbung der Mikrostrukturen 50 in Schritt F, als auch dem Aufkaschieren der zweiten Trägerfolie 42 in Schritt K.

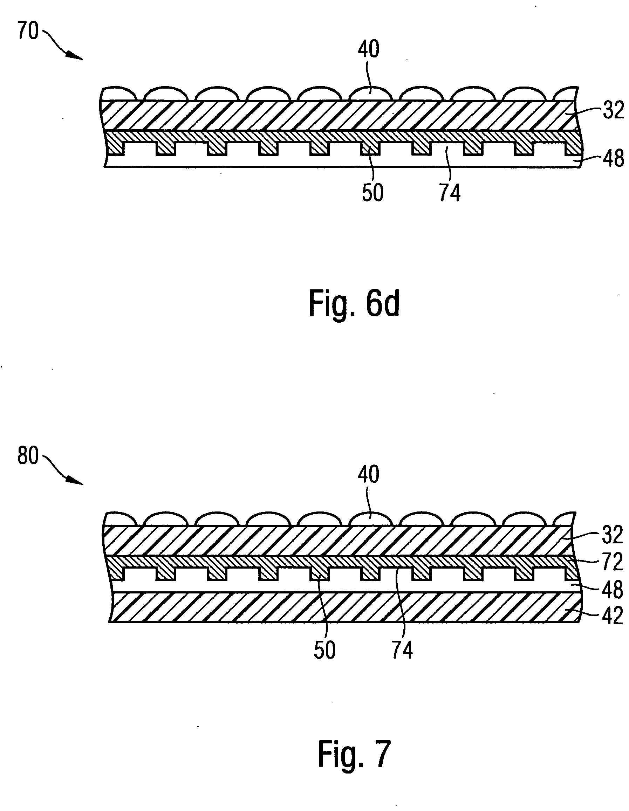

Anschließend wird, wie in Fig. 6(c) gezeigt, die zweite Trägerfolie 42 von dem entstandenen Schichtverbund abgezogen, um die in Fig. 6(d) dargestellte Schichtenfolge 70 zu erhalten.

Der Fokus der Mikrolinsen 40 ist dabei so gewählt, dass er im Bereich der mit farbigem Kaschierkleber 72 gefüllten Vertiefungen der Mikrostrukturen 50 liegt. Durch die Dickenunterschiede des Kaschierklebers 72 ergibt sich ein deutlicher Kontrastunterschied zwischen den Mikrostrukturen 50 und den umgebenden erhabenen Bereichen 74, so dass die in den Mikrostrukturen 50 enthaltene Information durch die Mikrolinsen 40 Moire-vergrößert lesbar ist. Auch bei dieser Erfindungsvariante liegen die farbigen Mikrostrukturen 50 innen zwischen der Prägelackschicht 48 und der zweiten Trägerfolie 32, und sind so ausgezeichnet gegen äußere Einflüsse geschützt. Ausgehend von der Schichtenfolge 70 kann die weitere Ausrüstung des Sicherheitselements wie bei Fig. 3 beschrieben erfolgen.

Auch bei dem in Zusammenhang mit Fig. 6 beschriebenen Herstellungsverfahren kann alternativ vorgesehen sein, dass die zweite Trägerfolie 42 nicht abgezogen wird, sondern dauerhaft in der Moiré-Vergrößerungsanordnung verbleibt. Bei der in Fig. 7 gezeigten Erfindungsvariante 80 wurde dazu der Prägelack 48 in Schritt T2) auf der zweiten Trägerfolie 42 verankert. Um die Gesamtdicke der Schichtenfolge 80 nicht zu groß werden zu lassen, wurden auch bei dieser Erfindungsvariante vorzugsweise zweite Trägerfolien mit einer Foliendicke von 6 µm bis 23 µm, insbesondere von etwa 12 µm eingesetzt. Nach dem Kaschierschritt K) sind die geprägten Mikrostrukturen 50 im Fadenverbund einkaschiert, die Mikrolinsen 40 sitzen außen auf.

## Patentansprüche

1. Verfahren zum Erzeugen einer mikrooptischen Darstellungsanordnung zur Darstellung eines vorgegebenen Motivs, die ein farbiges Motivraster aus einer Mehrzahl von Mikromotivelementen und ein Fokussierelementraster aus einer Mehrzahl von Mikrofokussierelementen aufweist, das bei Betrachtung der Mikromotivelemente das vorgegebene Motiv rekonstruiert, wobei bei dem Verfahren
T1) eine erste Trägerfolie (32) mit gegenüberliegenden Hauptflächen bereitgestellt wird, auf einer ersten Hauptfläche der ersten Trägerfolie ein Prägelack (38) aufgebracht wird und in Form des Fokussierelementrasters aus einer zumindest lokal periodischen Anordnung einer Mehrzahl von Mikrofokussierelementen (40) geprägt wird,
T2) eine zweite Trägerfolie (42) mit gegenüberliegenden Hauptflächen bereitgestellt wird, auf einer ersten Hauptfläche der zweiten Trägerfolie eine Anordnung von farbigen Mikromotivelementen (50) in Form des Motivrasters erzeugt wird, indem zunächst in einem Schritt
T2P) die zweite Trägerfolie (42) mit gegenüberliegenden Hauptflächen bereitgestellt wird, auf der ersten Hauptfläche der zweiten Trägerfolie ein Prägelack aufgebracht wird und in Form des Motivrasters aus einer Anordnung von Mikrostrukturen geprägt wird, deren Formen den gewünschten Mikromotivelementen (50) entsprechen, und in einem Schritt
T2F) die geprägten Mikrostrukturen der zweiten Trägerfolie mit einer Farbe (52) gefüllt werden, und
K) die zweite Trägerfolie (42) mit zumindest einem Kaschierkleber auf die dem Fokussierelementraster gegenüberliegende zweite Hauptfläche der ersten Trägerfolie aufkaschiert wird, indem
- entweder ein transparenter Kaschierkleber (56) auf die das Motivraster aufweisende erste Hauptfläche der zweiten Trägerfolie aufgebracht wird und die zweite Trägerfolie mit ihrer ersten Hauptfläche auf die zweite Hauptfläche der ersten Trägerfolie aufkaschiert wird,
- oder ein transparenter Kaschierkleber (56) auf die dem Fokussierelementraster gegenüberliegende zweite Hauptfläche der ersten Trägerfolie aufgebracht wird und die zweite Trägerfolie mit ihrer das Motivraster aufweisenden ersten Hauptfläche auf die zweite Hauptfläche der ersten Trägerfolie aufkaschiert wird, wobei das Auftragsgewicht des transparenten Kaschierklebers entsprechend dem gewünschten Abstand von Fokussierelementraster und Motivraster gewählt wird.

2. Verfahren nach Anspruch 1, **dadurch gekennzeichnet, dass** die zweite Trägerfolie (42) nach dem Aufkaschieren auf die erste Trägerfolie (32) abgezogen wird, insbesondere dass nach dem Abziehen der zweiten Trägerfolie die dann freiliegende Oberfläche mit einer Druckschicht oder einer Metallisierung versehen wird.

3. Verfahren nach Anspruch 1, **dadurch gekennzeichnet, dass** der Prägelack in Schritt T2P) auf der zweiten Trägerfolie (42) verankert wird und die zweite Trägerfolie (42) dauerhaft in der mikrooptischen Darstellungsanordnung verbleibt.

4. Verfahren zum Erzeugen einer mikrooptischen Darstellungsanordnung zur Darstellung eines vorgegebenen Motivs, die ein farbiges Motivraster aus einer Mehrzahl von Mikromotivelementen und ein Fokussierelementraster aus einer Mehrzahl von Mikrofokussierelementen aufweist, das bei Betrachtung der Mikromotivelemente das vorgegebene Motiv rekonstruiert, wobei bei dem Verfahren
T1) eine erste Trägerfolie (32) mit gegenüberliegenden Hauptflächen bereitgestellt wird, auf einer ersten Hauptfläche der ersten Trägerfolie ein Prägelack (38) aufgebracht wird und in Form des Fokussierelementrasters aus einer zumindest lokal periodischen Anordnung einer Mehrzahl von Mikrofokussierelementen (40) geprägt wird,
T2) eine zweite Trägerfolie (42) mit gegenüberliegenden Hauptflächen bereitgestellt wird, auf einer ersten Hauptfläche der zweiten Trägerfolie eine Anordnung von farbigen Mikromotivelementen (50) in Form des Motivrasters erzeugt wird, indem zunächst in einem Schritt
T2P) die zweite Trägerfolie (42) mit gegenüberliegenden Hauptflächen bereitgestellt wird, auf der ersten Hauptfläche der zweiten Trägerfolie ein Prägelack aufgebracht wird und in Form des Motivrasters aus einer Anordnung von Mikrostrukturen geprägt wird, deren Formen den gewünschten Mikromotivelementen (50) entsprechen, und in einem Schritt
T2F) die geprägten Mikrostrukturen der zweiten Trägerfolie mit einer Farbe gefüllt werden, und
K) die zweite Trägerfolie (42) mit zumindest einem Kaschierkleber auf die dem Fokussierelementraster gegenüberliegende zweite Hauptfläche der ersten Trägerfolie (32) aufkaschiert wird,
wobei in Schritt T2F) entweder zumindest ein farbiger Kaschierkleber (72) auf die das Motivraster aufweisende erste Hauptfläche der zweiten Trägerfolie (42) aufgebracht wird, der die Mikrostrukturen füllt und der dem Aufkaschieren der zweiten Trägerfolie in Schritt K) dient, oder zumindest ein farbiger Kaschierkleber (72) auf die dem Fokussierelementraster gegenüberliegende zweite Hauptfläche der ersten Trägerfolie aufgebracht wird, und in Schritt K) die zweite Trägerfolie mit ihrer das Motivraster aufweisenden ersten Hauptfläche auf die zweite Hauptfläche der ersten Trägerfolie aufkaschiert wird, wobei der dort aufgebrachte farbige Kaschierkleber die Mikrostrukturen der zweiten Trägerfolie füllt.

5. Verfahren nach wenigstens einem der Ansprüche 1 bis 3, **dadurch gekennzeichnet, dass** in Schritt T2F) eine Farbe auf Basis löslicher Farbstoffe oder auf Basis von Farbpigmenten auf die geprägten Mikrostrukturen aufgebracht wird, oder dass in Schritt T2F) eine Farbe auf Basis eines Lackträgers mit metallischen Nanopartikeln aufgebracht wird.

6. Verfahren nach Anspruch 5, **dadurch gekennzeichnet, dass** ein außerhalb der geprägten Mikrostrukturen vorliegender Farbüberschuss entfernt, insbesondere abgerakelt wird.

7. Verfahren nach Anspruch 4, **dadurch gekennzeichnet, dass** das Auftragsgewicht des zumindest einen farbigen Kaschierklebers so gewählt wird, dass die geprägten Mikrostrukturen vollständig gefüllt werden und der Kaschierkleber im Bereich außerhalb der Mikrostrukturen in einer geringen Schichtdicke von 3 µm oder weniger, vorzugsweise von 2 µm oder weniger, und insbesondere von etwa 1 µm vorliegt.

8. Verfahren nach Anspruch 4 oder 7, **dadurch gekennzeichnet, dass** die zweite Trägerfolie (42) nach dem Aufkaschieren auf die erste Trägerfolie abgezogen wird, insbesondere dass nach dem Abziehen der zweiten Trägerfolie die dann freiliegende Oberfläche mit einer Druckschicht oder einer Metallisierung versehen wird.

9. Verfahren nach Anspruch 4 oder 7, **dadurch gekennzeichnet, dass** der Prägelack in Schritt T2P) auf der zweiten Trägerfolie (42) verankert wird und die zweite Trägerfolie dauerhaft in der mikrooptischen Darstellungsanordnung verbleibt.

10. Verfahren nach wenigstens einem der Ansprüche 1 bis 9, **dadurch gekennzeichnet, dass** die zweite Hauptfläche der ersten Trägerfolie (32) vor dem Kaschierschritt K) mit einer partiellen Metallisierung versehen wird, insbesondere dass die partielle Metallisierung als Teil eines Hologramms oder eines Dünnschichtelements mit Farbkippeffekt erzeugt wird.

11. Verfahren nach wenigstens einem der Ansprüche 1 bis 10, **dadurch gekennzeichnet, dass** als Prägelack in Schritt T2P) ein thermoplastischer oder strahlungshärtender Lack aufgebracht wird, bevorzugt in einer Schichtdicke zwischen 1 µm und 15 µm, besonders bevorzugt zwischen 4 µm und 8 µm.

12. Gegenstand, insbesondere Datenträger oder Sicherheitselement, mit einer nach einem der Ansprüche 1 bis 11 erzeugten mikrooptischen Darstellungsanordnung.

13. Gegenstand nach Anspruch 12, mit einer nach Anspruch 2 oder 8 erzeugten mikrooptischen Darstellungsanordnung, **dadurch gekennzeichnet, dass** die mikrooptische Darstellungsanordnung eine einzige Trägerfolie enthält, wobei das Fokussierelementraster auf einer ersten Hauptfläche der Trägerfolie und das farbige Motivraster in einer Prägelackschicht auf der gegenüberliegenden zweiten Hauptfläche der Trägerfolie angeordnet sind und wobei das farbige Motivraster innen zwischen der Prägelackschicht und der einzigen Trägerfolie angeordnet ist, insbesondere dass das farbige Motivraster durch Vertiefungen der Prägelackschicht gebildet ist, die mit einer Farbe auf Basis löslicher Farbstoffe, einer Farbe auf Basis von Farbpigmenten, einer Farbe auf Basis eines Lackträgers mit metallischen Nanopartikeln oder mit einem farbigen Kaschierkleber gefüllt sind.

14. Gegenstand nach Anspruch 12, **dadurch gekennzeichnet, dass** die mikrooptische Darstellungsanordnung eine erste und eine zweite Trägerfolie (32, 42) enthält, zwischen denen in einer Prägelackschicht das farbige Motivraster vorliegt, und bei der das Fokussierelementraster auf einer außen liegenden Hauptfläche einer der Trägerfolien angeordnet ist, insbesondere dass das farbige Motivraster durch Vertiefungen der Prägelackschicht gebildet ist, die mit einem farbigen Kaschierkleber gefüllt sind.

15. Gegenstand nach Anspruch 12, **dadurch gekennzeichnet, dass** die mikrooptische Darstellungsanordnung zwei aufeinander kaschierte Trägerfolien enthält, wobei das farbige Motivraster auf der außen liegenden Hauptfläche einer der Trägerfolien und das Fokussierelementraster auf der außen liegenden Hauptfläche der anderen der Trägerfolien angeordnet ist.

## Claims

1. A method for producing, for the depiction of a specified motif, a micro-optical depiction arrangement that exhibits a colored motif grid, composed of a plurality of micromotif elements, and a focusing element grid, composed of a plurality of microfocusing elements, that reconstructs the specified motif when the micromotif elements are viewed, and in the method,
T1) a first substrate foil (32) having opposing main surfaces is provided, and an embossing lacquer (38) is applied on a first main surface of the first substrate foil and is embossed in the form of the focusing element grid composed of an at least locally periodic arrangement of a plurality of microfocusing elements (40),
T2) a second substrate foil (42) having opposing main surfaces is provided, an arrangement of colored micromotif elements (50) is produced in the form of the motif grid on a first main surface of the second substrate foil, in that, first, in a step
T2P) the second substrate foil (42) having opposing main surfaces is provided, and an embossing lacquer is applied on the first main surface of the second substrate foil and is embossed in the form of the motif grid composed of an arrangement of micropatterns whose shapes correspond to the desired micromotif elements (50), and in a step
T2F) the embossed micropatterns of the second substrate foil are filled with an ink (52), and
K) the second substrate foil (42) is laminated, with at least one laminating adhesive, onto the second main surface, opposite the focusing element grid, of the first substrate foil, in that,
- either a transparent laminating adhesive (56) is applied to the motif-grid-exhibiting first main surface of the second substrate foil, and the second substrate foil is laminated, with its first main surface, onto the second main surface of the first substrate foil,
- or a transparent laminating adhesive (56) is applied to the second main surface, opposite the focusing element grid, of the first substrate foil, and the second substrate foil is laminated, with its motif-grid-exhibiting first main surface, onto the second main surface of the first substrate foil, wherein the coating weight of the transparent adhesive is chosen according to the desired spacing of the focusing element grid and the motif grid.

2. The method according to claim 1, **characterized in that** the second substrate foil (42) is removed after the lamination onto the first substrate foil (32), especially, that after the removal of the second substrate foil, the then exposed surface is provided with a printing layer or a metalization.

3. The method according to claim 1, **characterized in that** the embossing lacquer in step T2P) is anchored on the second substrate foil (42), and the second substrate foil (42) remains in the micro-optical depiction arrangement permanently.

4. A method for producing, for the depiction of a specified motif, a micro-optical depiction arrangement that exhibits a colored motif grid, composed of a plurality of micromotif elements, and a focusing element grid, composed of a plurality of microfocusing elements, that reconstructs the specified motif when the micromotif elements are viewed, and in the method,
T1) a first substrate foil (32) having opposing main surfaces is provided, and an embossing lacquer (38) is applied on a first main surface of the first substrate foil and is embossed in the form of the focusing element grid composed of an at least locally periodic arrangement of a plurality of microfocusing elements (40),
T2) a second substrate foil (42) having opposing main surfaces is provided, an arrangement of colored micromotif elements (50) is produced in the form of the motif grid on a first main surface of the second substrate foil, in that, first, in a step
T2P) the second substrate foil (42) having opposing main surfaces is provided, and an embossing lacquer is applied on the first main surface of the second substrate foil and is embossed in the form of the motif grid composed of an arrangement of micropatterns whose shapes correspond to the desired micromotif elements (50), and in a step
T2F) the embossed micropatterns of the second substrate foil are filled with an ink, and
K) the second substrate foil (42) is laminated, with at least one laminating adhesive, onto the second main surface, opposite the focusing element grid, of the first substrate foil (32),
in that, in step T2F), either at least one colored laminating adhesive (72) is applied to the motif-grid-exhibiting first main surface of the second substrate foil (42), which adhesive fills the micropatterns and serves to laminate the second substrate foil in step K), or at least one colored laminating adhesive (72) is applied to the second main surface, opposite the focusing element grid, of the first substrate foil, and in step K), the second substrate foil is laminated, with its motif-grid-exhibiting first main surface, onto the second main surface of the first substrate foil, the colored laminating adhesive applied there filling the micropatterns of the second substrate foil.

5. The method according to at least one of claims 1 to 3, **characterized in that**, in step T2F), an ink based on soluble dyes or based on color pigments is applied to the embossed micropatterns, or that, in step T2F), an ink based on a lacquer medium having metallic nanoparticles is applied.

6. The method according to claim 5, **characterized in that** any excess ink present outside the embossed micropatterns is removed, especially squeegeed off.

7. The method according to claim 4, **characterized in that** the coating weight of the at least one colored laminating adhesive is chosen such that the embossed micropatterns are completely filled and the laminating adhesive is present in the region outside the micropatterns in a small layer thickness of 3 µm or less, preferably of 2 µm or less, and especially of about 1 µm.

8. The method according to claim 4 of 7, **characterized in that** the second substrate foil (42) is removed after the lamination onto the first substrate foil, especially, that after the removal of the second substrate foil, the then exposed surface is provided with a printing layer or a metalization.

9. The method according to claim 4 or 7, **characterized in that** the embossing lacquer in step T2P) is anchored on the second substrate foil (42), and the second substrate foil remains in the micro-optical depiction arrangement permanently.

10. The method according to at least one of claims 1 to 9, **characterized in that** the second main surface of the first substrate foil (32) is provided with a partial metalization before the lamination step K), especially, that the partial metalization is produced as part of a hologram or a thin-film element having a color-shift effect.

11. The method according to at least one of claims 1 to 10, **characterized in that**, as the embossing lacquer in step T2P), a thermoplastic or radiation-curing lacquer is applied, preferably in a layer thickness between 1 µm and 15 µm, particularly preferably between 4 µm and 8 µm.

12. An object, especially a data carrier or security element, having a micro-optical depiction arrangement produced according to one of claims 1 to 11.

13. The object according to claim 12, having a micro-optical depiction arrangement produced according to claim 2 or 8, **characterized in that** the micro-optical depiction arrangement includes a single substrate foil, the focusing element grid being arranged on a first main surface of the substrate foil and the colored motif grid in an embossing lacquer layer on the opposing second main surface of the substrate foil, and the colored motif grid being arranged inside between the embossing lacquer layer and the single substrate foil, especially, that the colored motif grid is formed by depressions in the embossing lacquer layer that are filled with an ink based on soluble dyes, an ink based on color pigments, an ink based on a lacquer medium having metallic nanoparticles, or with a colored laminating adhesive.

14. The object according to claim 12, **characterized in that** the micro-optical depiction arrangement includes a first and a second substrate foil (42), between which the colored motif grid is present in an embossing lacquer layer, and in which the focusing element grid is arranged on an outside main surface of one of the substrate foils, especially, that the colored motif grid is formed by depressions in the embossing lacquer layer that are filled with a colored laminating adhesive.

15. The object according to claim 12, **characterized in that** the micro-optical depiction arrangement includes two substrate foils laminated onto one another, the colored motif grid being arranged on the outside main surface of one of the substrate foils and the focusing element grid on the outside main surface of the other of the substrate foils.

## Revendications

1. Procédé pour produire une configuration de représentation micro-optique pour la représentation d'un motif prédéfini, laquelle présente un réseau du motif en couleur à base d'une pluralité de microéléments de motif et un réseau d'éléments de focalisation à base d'une pluralité de microéléments de focalisation, lequel , lors de l'observation des microéléments de motif, reconstruit le motif prédéfini, dans lequel, avec le procédé,
T1) une première feuille de support (32) avec des surfaces principales situées en vis-à-vis est mise à disposition, sur une première surface principale de la première feuille de support un vernis de gaufrage (38) est appliqué et est gaufré en forme du réseau d'éléments de focalisation à base d'une configuration au moins localement périodique d'une pluralité de microéléments de focalisation (40),
T2) une deuxième feuille de support (42) avec des surfaces principales situées en vis-à-vis est mise à disposition, sur une première surface principale de la deuxième feuille de support, une configuration de microéléments de motif en couleur (50) en forme du réseau du motif est produite en ce que, tout d'abord dans une étape
T2P) la deuxième feuille de support (42) avec des surfaces principales situées en vis-à-vis est mise à disposition, sur la première surface principale de la deuxième feuille de support un vernis de gaufrage est appliqué et est gaufré en forme du réseau du motif à base d'une configuration de microstructures dont les formes correspondent aux microéléments de motif (50) souhaités, et dans une étape
T2F) les microstructures gaufrées de la deuxième feuille de support sont remplies avec une encre (52), et
K) la deuxième feuille de support (42) est contre collée avec au moins une colle de contrecollage sur la deuxième surface principale, située en vis-à-vis du réseau d'éléments de focalisation, de la première feuille de support en ce que
- soit une colle de contrecollage transparente (56) est appliquée sur la première surface principale, présentant le réseau du motif, de la deuxième feuille de support, et la deuxième feuille de support est contrecollée avec sa première surface principale sur la deuxième surface principale de la première feuille de support,
- soit une colle de contrecollage transparente (56) est appliquée sur la deuxième surface principale, située en vis-à-vis du réseau d'éléments de focalisation, de la première feuille de support, et la deuxième feuille de support est contrecollée avec sa première surface principale présentant le réseau du motif sur la deuxième surface principale de la première feuille de support, dans lequel le poids d'application de la colle de contrecollage transparente est sélectionné de manière correspondante à l'espacement souhaité entre le réseau d'éléments de focalisation et le réseau du motif.

2. Procédé selon la revendication 1, **caractérisé en ce que** la deuxième feuille de support (42) est pelée après le contrecollage sur la première feuille de support (32), en particulier **en ce qu'**après le pelage de la deuxième feuille de support, la surface alors à découvert est dotée d'une couche d'impression ou d'une métallisation.

3. Procédé selon la revendication 1, **caractérisé en ce qu'**à l'étape T2P), le vernis de gaufrage est ancré sur la deuxième feuille de support (42), et la deuxième feuille de support (42) subsiste de manière durable dans la configuration de représentation micro-optique.

4. Procédé pour produire une configuration de représentation micro-optique pour la représentation d'un motif prédéfini, laquelle présente un réseau du motif en couleur à base d'une pluralité de microéléments de motif et un réseau d'éléments de focalisation à base d'une pluralité de microéléments de focalisation, lequel , lors de l'observation des microéléments de motif, reconstruit le motif prédéfini, dans lequel, avec le procédé,
T1) une première feuille de support (32) avec des surfaces principales situées en vis-à-vis est mise à disposition, sur une première surface principale de la première feuille de support un vernis de gaufrage (38) est appliqué et est gaufré en forme du réseau d'éléments de focalisation à base d'une configuration au moins localement périodique d'une pluralité de microéléments de focalisation (40),
T2) une deuxième feuille de support (42) avec des surfaces principales situées en vis-à-vis est mise à disposition, sur une première surface principale de la deuxième feuille de support, une configuration de microéléments de motif en couleur (50) en forme du réseau du motif est produite en ce que, tout d'abord dans une étape
T2P) la deuxième feuille de support (42) avec des surfaces principales situées en vis-à-vis est mise à disposition, sur la première surface principale de la deuxième feuille de support un vernis de gaufrage est appliqué et est gaufré en forme du réseau du motif à base d'une configuration de microstructures dont les formes correspondent aux microéléments de motif (50) souhaités, et dans une étape
T2F) les microstructures gaufrées de la deuxième feuille de support sont remplies avec une encre, et
K) la deuxième feuille de support (42) est contre collée avec au moins une colle de contrecollage sur la deuxième surface principale, située en vis-à-vis du réseau d'éléments de focalisation, de la première feuille de support (32),
dans lequel à l'étape T2F), soit au moins une colle de contrecollage en couleur (72) est appliquée sur la première surface principale, présentant le réseau du motif, de la deuxième feuille de support (42), laquelle rempli les microstructures et sert au contrecollage de la deuxième feuille de support à l'étape K), soit au moins une colle de contrecollage en couleur (72) est appliquée sur la deuxième surface principale, située en vis-à-vis du réseau d'éléments de focalisation, de la première feuille de support, et à l'étape K), la deuxième feuille de support est contrecollée avec sa première surface principale présentant le réseau du motif sur la deuxième surface principale de la première feuille de support, dans lequel la colle de contrecollage en couleur qui y est appliquée remplit les microstructures de la deuxième feuille de support.

5. Procédé selon l'une au moins des revendications 1 à 3, **caractérisé en ce qu'**à l'étape T2F), une encre à base de colorants solubles ou à base de pigments colorés est appliquée sur les microstructures gaufrées, ou **en ce qu'**à l'étape T2F), une encre à base d'un support de vernis avec des nanoparticules métalliques est appliquée.

6. Procédé selon la revendication 5, **caractérisé en ce qu'**un excédent d'encre présent à l'extérieur des microstructures gaufrées est éliminé, en particulier raclé.

7. Procédé selon la revendication 4, **caractérisé en ce que** le poids d'application de l'au moins une colle de contrecollage en couleur est sélectionné de telle sorte que les microstructures gaufrées sont complètement remplies et que, dans la zone à l'extérieur des microstructures, la colle de contrecollage est présente à une faible épaisseur de couche de 3 µm ou moins, de préférence de 2 µm ou moins, et en particulier de près de 1 µm.

8. Procédé selon la revendication 4 ou 7, **caractérisé en ce que**, après le contrecollage sur la première feuille de support, la deuxième feuille de support (42) est pelée, en particulier **en ce qu'**après le pelage de la deuxième feuille de support, la surface alors à découvert est dotée d'une couche d'impression ou d'une métallisation.

9. Procédé selon la revendication 4 ou 7, **caractérisé en ce qu'**à l'étape T2P), le vernis de gaufrage est ancré sur la deuxième feuille de support (42) et la deuxième feuille de support subsiste de manière durable dans la configuration de représentation micro-optique.

10. Procédé selon l'une au moins des revendications 1 à 9, **caractérisé en ce qu'**avant l'étape de contrecollage K), la deuxième surface principale de la première feuille de support (32) est dotée d'une métallisation partielle, en particulier **en ce que** la métallisation partielle est produite en tant que partie d'un hologramme ou d'un élément à couche mince avec effet de changement de couleur.

11. Procédé selon l'une au moins des revendications 1 à 10, **caractérisé en ce qu'**à l'étape T2P) on applique, en guise de vernis de gaufrage, un vernis thermoplastique ou durcissant aux rayons, de préférence selon une épaisseur de couche comprise entre 1 µm et 15 µm, de manière particulièrement préférée entre 4 µm et 8 µm.

12. Objet, en particulier support de données ou élément de sécurité, avec une configuration de représentation micro-optique produite selon l'une des revendications 1 à 11.

13. Objet selon la revendication 12, avec une configuration de représentation micro-optique produite selon l'une des représentations 2 ou 8, **caractérisé en ce que** la configuration de représentation micro-optique comprend une unique feuille de support, dans lequel le réseau d'éléments de focalisation est disposé sur une première surface principale de la feuille de support et le réseau du motif en couleur est disposé dans une couche de vernis de gaufrage sur la deuxième surface principale, située en vis-à-vis, de la feuille de support, et dans lequel le réseau du motif en couleur est disposé à l'intérieur, entre la couche de vernis de gaufrage et l'unique feuille de support, en particulier **en ce que** le réseau du motif en couleur est formé par des dépressions de la couche de vernis de gaufrage, lesquelles sont remplies avec une encre à base de colorants solubles, une encre à base de pigments colorés, une encre à base d'un support de vernis avec des nanoparticules métalliques ou avec une colle de contrecollage en couleur.

14. Objet selon la revendication 12, **caractérisé en ce que** la configuration de représentation micro-optique comprend une première et une deuxième feuille de support (32, 42) entre lesquelles le réseau du motif en couleur est présent dans une couche de vernis de gaufrage, et où le réseau d'éléments de focalisation est disposé sur une surface principale située à l'extérieur de l'une des feuilles de support, en particulier **en ce que** le réseau du motif en couleur est formé par des dépressions de la couche de vernis de gaufrage, lesquelles sont remplies avec une colle de contrecollage en couleur.

15. Objet selon la revendication 12, **caractérisé en ce que** la configuration de représentation micro-optique contient deux feuilles de support contrecollées l'une sur l'autre, dans lequel le réseau du motif en couleur est disposé sur la surface principale située à l'extérieur de l'une des feuilles de support, et le réseau d'éléments de focalisation est disposé sur la surface principale située à l'extérieur de l'autre des feuilles de support.
